# NOUVEAU FASCICULE DE BREVET EUROPEEN

(11) **EP 0 690 882 B2**
(45) Date de publication et mention de la décision concernant l'opposition: **13.04.2005**
(45) Mention de la délivrance du brevet: 28.01.1998
(21) Numéro de dépôt: 94910444.2
(22) Date de dépôt: 21.03.1994
(51) Int. Cl.: C08F 265/06, C08F 20/12

(54) **LATEX POUR PEINTURES SANS SOLVANT POSSEDANT UNE LESSIVABILITE AMELIOREE**
LATEX FÜR LACKE OHNE LÖSUNGSMITTEL MIT VERBESSERTER AUSWASCHBARKEIT
LATEX FOR SOLVENT-FREE PAINTS HAVING IMPROVED WASHABILITY

(30) Priorité: 24.03.1993 FR 9303402
(43) Date de publication de la demande: 10.01.1996
(73) Titulaire: CRAY VALLEY SA, 92400 Courbevoie (FR)
(72) Inventeur: DENAMUR, Yves, F-60870 Brenouille (FR); GUERIN, Patrick, Schooner Way, Cardiff CF1 5DZ (GB); MICHEL, Jean-Marie, F-60940 Cinqueux (FR)
(74) Mandataire: Chaillot, Geneviève
(86) Numéro de dépôt international: PCT/FR1994/000306
(87) Numéro de publication internationale: WO 1994/021699

(56) Documents cités:
- EP-A- 0 417 568
- EP-A- 0 567 812
- EP-A- 0 614 922
- DE-A- 2 842 719
- CHEMICAL ABSTRACTS, vol. 104, no. 18, 5 Mai 1986, Columbus, Ohio, US; abstract no. 149629, 'EMULSION POLYMER COMPOSITIONS' page 15 ;colonne 1 ; & JP,A,60 179 402 (TOA GOSEI CHEM. IND. CO. LTD.)
- Progress in Organic Coatings, 11, 1983, pp. 339-352
- Surface Coatings, TAFE EDUCATIONAL BOOKS, Macarthur Press, 1983, pp. 171-174
- E.J. Shaller, J.Paint Tech. 40 (525), 1968, pp. 433-438
- Ullmanns Encyclopädie der technischen Chemie, Band 19, 1980. pp. 1-30

## Description

La présente invention se rapporte à une dispersion aqueuse de polymère possèdant un pouvoir liant vis-à-vis des charges amélioré, à un procédé pour sa fabrication et à son application à des formulations de peintures sans solvant possédant une lessivabilité améliorée.

Des compositions de peintures à base de latex contenant des pigments opacifiants tels que le dioxyde de titane et des pigments non-opacifiants tels que des inertes ou des extendeurs pour produire des films de peintures pouvant ètre facilement lavés sans abimer leur surface sont connues depuis longtemps. Lorsqu'une émulsion aqueuse de polymère est appliquée à un substrat et après que l'eau se soit évaporée, il apparait un film à la surface dudit substrat en raison de la coalescence du polymère présent dans l'émulsion.

En vue d'obtenir un film homogène, les forces de coalescence doivent dépasser la résistance des particules de polymère à la déformation et à la viscoélasticité. Le caractère viscoélastique des particules de polymère est par conséquent le principal trait qui détermine les tendances à la filmification du latex.

Il est bien connu d'utiliser un plastifiant pour modifier la viscoélasticité d'un latex polymère. Les plastifiants peuvent ètre des solides à faible point de fusion (par exemple le dibutyl- ou le dioctylphtalate) ou bien des solvants à haut point d'ébullition. De manière générale, ils accroissent l'élongation et l'élasticité mais réduisent la force de rupture de la résine dans laquelle ils sont incorporés. Bien qu'ils soient moins volatiles que les solvants, ils possèdent néanmoins une odeur caractéristique.

Il est également connu d'utiliser des solvants (par exemple du type glycol), parfois dénommés agents de coalescence, en vue de modifier la nature viscoélastique du polymère. Ce sont des plastifiants fugitifs en ceci qu'ils facilitent la déformation élastique des particules du latex.

L'emploi de plastifiants et d'agents de coalescence dans les films de latex a pou conséquence un plus grand degré de coalescence dans une gamme étendue de températures, et l'on a pensé jusqu'ici que leur présence était essentielle à la bonne formation du film.

Une caractéristique de la bonne filmification est la lessivabilité, qui est l'aptitude à résister aux craquelures et au pelage dans un environnement aqueux tel que les conditions ordinaires d'usage. De nombreux efforts ont été déployés afin d'améliorer la lessivabilité des peintures. Par exemple, le brevet US-A-3.736.287 décrit, en tant qu'émulsion aqueuse de polymère utile comme liant pour peinture, une émulsion de pentapolymère dont les peintures dérivées montrent une lessivabilité - mesurée selon la norme ASTM D-2486 - de 300 à 640 cycles. De telles valeurs, cependant, sont considérées comme très inférieures aux exigences actuelles. Dans le cas des peintures comprenant comme liant un latex du type styrène-acrylique ou de type tout-acrylique, la plupart des efforts ont porté sur la modification chimique du liant latex par l'inclusion dans la structure de l'interpolymère de faibles quantités d'un monomère fonctionnel supplémentaire. Par exemple des monomères tels que des acides carboxyliques C5 à C36 et leurs sels d' ammonium, amides, esters, aldéhydes et alcools (brevet EP-A-252.526), des esters d'acide acétoacétique (brevet DE-A-2.535.372), des dérivés de l'éthylène urée (brevet US-A-4.500.673), des produits de réaction de l'aminoéthyl-2-éthylène urée et d'alkylglycidyléther (brevet US-A-4.426.503), des produits de réaction d'aminoalkyl alkylène urée, de monoépoxydes saturés et de monoisicyanate fonctionnalisé méthacrylate (US-A-4.526.915), des dérivés d'imidazolidinone (brevet WO-A-91/12.243), la N-52,2-diméthoxyéthyl) méthacrylamide (brevet EP-A-337.873), des glycidyléthers (brevet EP-A-69.326) et d'autres composés ont été proposés dans ce but. Cependant ces monomères fonctionnels sont couteux et certains d'entr'eux sont dangereux à manipuler et/ou toxiques, c'est pourquoi la modification chimique de la structure interpolymère ne procure pas une voie commode pour améliorer la lessivabilité des peintures.

Il est également important de noter que les valeurs de lessivabilité d'un film de peinture n'ont de signification que lorsqu'elles sont reliées notamment au taux du latex liant dans la composition de peinture et à la durée de séchage du film de peinture avant que la mesure soit faite. Par exemple, un latex commercial de type styrène/acrylique incorporé à un taux de 12% en poids dans une composition de peinture sans plastifiant ni agent de coalescence procurera une lessivabilité (mesurée selon la norme DIN 53778) de :
300 cycles après 8 jours de séchage, et
700 cycles après 28 jours de séchage.

De même, un latex commercial de type styrène-acrylique incorporé dans une composition de peinture sans plastifiant ni agent de coalescence procurera une lessivabilité, mesurée selon la norme DIN 53778 après 8 jours de séchage, de :
200 cycles s'il est présent à un taux de 11% en poids, et
900 cycles s'il est présent à un taux de 15% en poids.

Etant donné que le latex liant constitue le composant le plus onéreux de la composition de peinture, il est généralement souhaitable d'atteindre des valeurs élevées de lessivabilité pour les taux de liant les plus bas possibles. Par conséquent un premier objet de la présente invention est de procurer des émulsions aqueuses de polymère utiles comme liants de peinture et à partir desquelles des peintures peuvent ètre formulées, qui ont une lessivabilité significativement améliorée par rapport à celles de l'art antérieur. Un autre objet de la présente invention est de proposer un procédé de fabrication d'une peinture en émulsion ayant une bonne lessivabilité dans le contexte de la technologie des polymères acryliques sans avoir recours à des plastifiants ou à des agents de coalescence. Ces buts de l'invention ainsi que les avantages en résultant peuvent ètre atteints par référence aux modes de mise en oeuvre suivants.

La présente invention est basée sur la découverte surprenante qu'une amélioration très significative de la lessivabilité des peintures à base de latex peut ètre obtenue sans qu'il soit nécessaire d'ajouter des monomères fonctionnels supplémentaires couteux et/ou toxiques dans la composition de liant polymère, comme cela était généralement suggéré dans les documents de l'art antérieur. Par contre, une telle amélioration peut ètre obtenue de façon simple en controlant certains paramètres de polymérisation au cours de la fabrication d'une émulsion aqueuse de monomères tels que des esters acryliques et/ou méthacryliques le cas échéant en mélange avec des monomères vinylaromatiques comme le styrène. De manière encore plus surprenante ce controle simple des paramètres de polymérisation permet d'atteindre des peintures à base de latex possédant des valeurs de lessivabilité - mesurées selon la norme DIN 53778 - aussi élevées qu'au moins environ 700 cycles pour une mesure effectuée après 8 jours de séchage sur un film de peinture comprenant 12% en poids du liant latex de la présente invention. En résumant rapidement, le trait caractéristique de l'invention réside dans le fait de contrôler une faible taille de particules dans la phase initiale de la synthèse du latex. Une particularité supplémentaire qui peut ètre utile, dans le cadre d'un tel procédé controlé, réside dans le choix de la quantité et du type de système tensio-actif. A ce sujet il est préférable d'utiliser un mélange de tensio-actif anionique et de tensio-actif non-ionique, dont les proportions respectives doivent ètre soigneusement choisies.

Les émulsions polymères aqueuses ou latex de la présente invention sont préparées dans des conditions de polymérisation en émulsion. Il est nécessaire cependant que le mode de polymérisation soit de nature à conduire à des latex ayant des viscosités compatibles avec leur emploi dans des applications de revètements telles que des peintures mates pour l'intérieur. En conséquence des techniques de polymérisation telles que celle dénommée surpolymérisation sont en dehors du champ de l'invention. De manière préférée le procédé ici visé implique l'addition d'un ou plusieurs, et de préférence tous les composants monomères dans la sphère réactionnelle sous forme émulsifiée. Plus particulièrement le procédé selon l'invention est caractérisé en ce que 80 à 95% en poids des composants monomériques sont ajoutés dans un milieu réactionnel contenant déja une pré-émulsion partiellement polymérisée de 5 à 20% en poids des composants monomériques et en ce que la taille moyenne des particules de polymère présentes dans ladite pré-émulsion partiellement polymérisée ne dépasse pas environ 95 nanomètres (nm), et de manière préférée 65 nm. La portion représentant 80 à 95% en poids des composants monomériques peut ètre introduite dans le milieu réactionnel sous forme émulsifiée. Les méthodes de mesure et de controle de la taille moyenne des particules dans la pré-émulsion partiellement polymérisée, avant que le flux principal des composants monomériques, de préférence sous forme émulsifiée, soit mélangée avec elle, sont bien connues de l'homme de l'art, par exemple par E.A.COLLINS, 18th Annual Short Course (Juin 1987) de l'Institut d'Emulsion des Polymères, Université Lehigh (Pennsylvanie), par E.A.COLLINS, J.A.DAVIDSON et C.A.DANIELS, J.Paint Technology 47, 35 (1975) et par les principes de fonctionnement de l'appareil AutoSizer Lo-C de MALVERN INSTRUMENTS.

Le procédé selon l'invention peut ètre avantageusement appliqué à des compositions monomériques comprenant, pour 100 parties en poids de composition:
- d'environ 60 à 100 parties en poids d'au moins un ester acrylique ou méthacrylique dérivé de l'acide acrylique ou méthacrylique et d'un alcool ayant de 1 à 12 atomes de carbone,
- de 0 à environ 40 parties en poids d'au moins un monomère vinylaromatique,
- de 0 à environ 5 parties en poids d'au moins un acide mono- ou polycarboxylique α,β-insaturé à chaine courte, et
- de 0 à environ 3 parties en poids d'au moins un amide α,β-insaturé à chaine courte.

Le type et les proportions des monomères dans le cadre de cette définition seront choisis, selon les connaissances générales de l'homme de l'art de la polymérisation en émulsion, en vue de procurer un (co)polymère ayant une température de transition vitreuse d'au plus 10°C et/ou une température minimale de filmification d'au plus 5°C.

Lesdites compositions peuvent en outre comprendre de 0 à environ 1 partie en poids, pour 100 parties en poids des monomères, d'au moins un agent de transfert de chaine afin de régler le poids moléculaire moyen en nombre du polymère résultant. Comme exemples de composés utilisables comme agents de transfert de chaine dans la présente invention on peut citer des acides mercaptocarboxyliques ayant de 2 à 8 atomes de carbone et leurs esters tels que l'acide mercaptoacétique, les acides mercapto-2 et mercapto-3 propioniques, l'acide mercapto-2 benzoique, l'acide mercaptosuccinique, l'acide mercaptoisophtalique et leurs esters d'alkyle. On préférera utiliser un acide mercaptomonocarboxylique et/ou un mercaptodicarboxylique ayant de 2 à 6 atomes de carbone, plus particulièrement un acide mercaptopropionique et ses esters d'alkyle, spécialement les esters d'isooctyle ou de n-dodécyle de l'acide mercaptopropionique.

Dans le cadre de telles compositions, l'homme de l'art peut également controler que la taille moyenne des particules de polymère présentes dans la pré-émulsion partiellement polymérisée n'excède pas 95 nm soit par la durée de polymérisation dudit flux partiel (5 à 20% en poids de la totalité des composants monomériques) de pré-émulsion, qui devra de préférence ne pas dépasser environ 45 minutes ou bien par le taux global de conversion des monomères dans ledit flux partiel de pré-émulsion, qui doit atteindre au moins 50% et de préférence au moins 90% en poids.

Comme esters (méth)acryliques utilisables dans les compositions de monomères à polymériser en émulsion, on peut citer l'acrylate de méthyle, l'acrylate d'éthyle, l'acrylate de n-butyle, l'acrylate de tertiobutyle, l'acrylate de 2-ethylhexyle, le méthacrylate de méthyle. Comme exemples d'acides mono- ou polycarboxyliques α,β insaturés à chaine courte utilisables dans les compositions monomériques selon l'invention, on peut citer l'acide acrylique, l'acide méthacrylique, l'acide itaconique, l'acide crotonique, l'acide maleique, l'acide fumarique, l'acide vinylbenzoique. Comme exemples d'amides α,β-insaturés à chaine courte utilisables dans les compositions monomériques selon l'invention, on peut citer la N-hydroxyméthylacrylamide, la N-hydroxyméthylméthacrylamide, la N-méthoxyméthylacrylamide, la N-méthoxyméthylméthacrylamide, la N-butoxyméthylacrylamide, la N-butoxyméthylméthacrylamide, la N-isopropoxyméthylacrylamide, la N-isoamyloxyméthylméthacrylamide, la N-octoxyméthylacrylamide. Comme monomères vinylaromatiques utilisables dans les compositions monomériques de l'invention, on peut citer le styrène, l'α-méthylstyrène, le vinyltoluène, le p-tertiobutylstyrène, l'ortho-, le méta- et le para-méthylstyrène, l'ortho-, le méta- et le paraéthylstyrène, l'o-méthyl-p-isopropylstyrène, le p-chlorostyrène, le p-bromostyrène, l'o,p-dichlorostyrène, l'o,p-dibromostyrène, le vinylnaphtalène, divers vinyl(alkylnaphtalènes) et vinyl(halonaphtalènes).

Le flux principal des composants monomériques et la pré-émulsion partiellement polymérisée mélangé avec lui sont émulsifiés au moyen d'au moins un agent tensio-actif de type anionique ou non-ionique. Comme déjà mentionné ci-dessus, il est préférable d'utiliser une combinaison de tensio-actif non-ionique et de tensio-actif anionique en vue de préparer lesdites émulsions. Comme exemples de tensio-actifs non-ioniques on peut citer des polyethers tels que des condensats d'oxyde d'éthylène et d'oxyde de propylène, des ethers et thioethers d'alkyl et alkylaryl polyéthylène glycols et polypropylène glycols, des alkylphénoxypoly (éthylenoxy) ethanols, des dérivés polyoxyalkylène d'esters partiels d'acides gras à chaine longue, des condensats d'oxyde d'éthylène avec des alkylmercaptans supérieurs, des dérivés d'oxyde d'éthylène dd'acides carboxyliques à chaine longue et d'alcools. Ces tensio-actifs non-ioniques contiennent de préférence d'environ 10 à 100 motifs éthylenoxy par molécule et encore plus préférentiellement d'environ 20 à 50 telles unités. Comme tensio-actifs non-ioniques utilisables en combinaison avec lesdits tensio-actifs non-ioniques on peut citer des sulfates et sulfonates de haut poids moléculaire, par exemple des alkyl-, aryl- et alkylarylsulfates et sulfonates de sodium et de potassium tels que le 2-ethylhexylsulfate de sodium, le 2-éthylhexylsulfate de potassium, le nonylsulfate de sodium, l'undécylsulfate de sodium, le tridécylsulfate de sodium, le pentadécyl-sulfate de sodium, le laurylsulfate de sodium, le méthylbenzènesulfonate desodium, le méthylbenzènesulfonate de potassium, le toluènesulfonate de potassium et le xylènesulfonate de sodium; des alcools gras supérieurs comme ceux de stéaryle et de lauryle, qui ont été éthoxylés et sulfonés; des dialkyl esters de sels alcalins d'acide sulfosuccinique, teles que le diamylsulfosuccinate de sodium; et des produits de condensation formaldéhyde/acide naphtalènesulfonique. La quantité totale de tensio-actifs utilisée dans le procédé de polymérisation en émulsion de la présente invention varie d'environ 2 à 20% en poids, de préférence environ 4 à 12% en poids, des composants monomériques. Le rapport en poids du tensio-actif anionique au tensio-actif non-ionique de vrait ètre compris entre 0,01 et 1, de préférence entre environ 0,05 et 0,5. La quantité d'eau utilisée dans le milieu réactionnel est en général déterminée par le taux de solides désiré dans l'émulsion polymère finie, qui se situe en général entre 40% et 70%, de préférence entre 45 et 60% en poids.

Les composants monomériques des latex de la présente invention sont polymérisés au moyen de quantités efficaces, de préférence entre 0,2 et 2% en poids de la charge totale de monomères, d'au moins un initiateur de radicaux libres conventionnel. Un tel initiateur est de préférence substantiellement hydrosoluble. De tels initiateurs comprennent des peroxydes minéraux, tels que le peroxyde d'hydrogène, des persulfates et perborates de métal alcalin et des systèmes redox tels que des combinaisons d'un persulfate, perborate ou perchlorate d'ammonium ou de métal alcalin avec un bisulfite de métal alcalin.

La température de polymérisation requise pour produire les latex polymères aqueux de la présente invention , à la fois dans l'étape de prépolymérisation partielle concernant de 5 à 20% en poids de la charge de monomères et dans l'étape de polymérisation principale concernant l'ensemble de la charge de monomères, se situe généralement d'environ 40 à 95°C - de préférence d'environ 55 à 85°C - en fonction de la durée prévue pour la polymérisation. La durée de l'étape de polymérisation principale (addition de 80 à 95% en poids des composants monomériques au milieu réactionnel) se situe généralement d'environ 90 minutes à 8 heures, cette durée devenant plus élevée lorsque la température de polymérisation devient plus basse. En vue d'atteindre un taux final de conversion de la réaction de polymérisation de 100%, il peut ètre souhaitable de faire suivre l'étape de polymérisation principale par une cuisson de l'émulsion polymère aqueuse pendant environ 30 à 90 minutes à une température supérieure, de préférence d'au moins 8°C, à la température de polymérisation.

La composition de la charge de monomères durant l'étape de prépolymérisation partielle peut ètre la mème que ou bien peut ètre différente de la composition de la charge de monomères ajoutée au cours de l'étape de polymérisation principale, pourvu cependant que toutes les deux correspondent à la définition générale de la composition monomérique indiquée ci-dessus.

Une amélioration complémentaire de la présente invention réside dans le traitement de l'émulsion polymère aqueuse après l'étape de polymérisation principale et, le cas échéant, après l'étape de cuisson, au moyen d'un système d'initiation de radicaux libres ayant un temps de demi-vie court à la température considérée en vue d'atteindre un taux de conversion global proche de 100% et/ou un taux résiduel de monomères ne dépassant pas environ 50 ppm. Comme exemples de systèmes initiateurs de radicaux libres on peut citer des peroxydes organiques et minéraux tels que l'hydroperoxyde de taertiobutyle, le peroxyde de butyle, le peroxyde d'hydrogène ou des persulfates de métal alcalin, en combinaison avec un agent réducteur tel que le formaldéhydesulfoxylate de sodium, l'acide ascorbique, le sel de Mohr. Un tel traitement peut ètre effectué à des températures de 40°C à 90°C environ,

Lorsque le latex préparé en conformité avec la présente invention paraitra trop acide pour entrer dans la formulation de peintures, il pourra ètre souhaitable d'ajuster son pH à une valeur supérieure à 7, par exemple au moyen de toute matière alcaline telle que les hydroxydes de sodium, potassium ou ammonium.

Un autre objet de la présente invention consiste en une peinture sans plastifiant et sans agent de coalescence comprenant une émulsion aqueuse de polymère du type décrit ci-dessus, ladite peinture aqueuse possédant des performances extraordinairement élevées et en particulier une lessivabilité significativement améliorée par rapport à celle des peintures aqueuses de l'art antérieur. La méthode de formulation utilisée peut être l'une quelconque de celles connues jusqu'ici dans la technique de formulation des peintures au latex. Essentiellement, les peintures aqueuses selon l'invention comprennent un mélange de matière pigmentée et de latex. La matière pigmentaire est de préférence utilisée sous une forme convenablement réduite en poudre par des moyens conventionnels, ainsi que tous les autres adjuvants solides optionnels décrits ci-après.

Pour combiner les ingrédients de peinture afin de formuler la peinture au latex de la présente invention, un ou plusieurs pigments primaires et éventuellement d'autres adjuvants (qui eux-mème peuvent être liquides ou solides) peuvent être incorporés au liant latex pour former un mélange uniforme simplement en ajoutant toutes les matières premières dans un récipient agité. Bien qu'il soit possible de combiner les pigments et autres avec l'émulsion et de broyer ou piler le mélange dans un broyeur-disperseur, il est souhaitable de préparer d'abord une pâte aqueuse de pigment et d'adjuvants, de préférence avec l'aide d'un agent dispersant, dans un dispositif à haut gradient de cisaillement puis de combiner la pâte obtenue avec le latex. La consistance de la pâte peut être contrôlée par les quantités respectives d'eau, de pigments et d'adjuvants utilisés.

Les matières pigmentaires qui peuvent ètre utilisées pour formuler les peintures aqueuses de la présente invention comprennent (mais ne se limitent pas à) des pigments primaires conventionnels ou des bases colorantes telles que l'oxyde de titane, le noir de carbone, le sulfure de cadmium, le séléniure de cadmium, la phtalocyanine de cuivre, l'oxyde de zinc, le sulfure de zinc, l'oxyde de fer, l'oxyde de chrome. La proportion de matière pigmentaire utilisée pour formuler une peinture aqueuse selon la présente invention est déterminée par un certain nombre de facteurs, comprenant la profondeur de couleur désirée, le pouvoir couvrant. Etant donné que la présente invention est principalement applicable à des peintures mates c'est-à-dire, selon la norme DIN 53778 (partie 1), offrant une réflexion supérieure à 7% mais inférieure à 45% sous un angle de 85°, la concentration pigmentaire en volume est de préférence comprise entre 70% et 95% environ.

En complément des pigments primaires , un ou plusieurs adjuvants peuvent, si désiré, ètre inclus dans la formulation des peintures aqueuses de la présente invention. De tels ingrédients comprennent (mais ne se limitent pas à):
- des dispersants, aussi dénommés défloculants, c'est-à-dire des composés capables d'amplifier la formation de charges électriques de mème signe à la surface des particules de polymère et par conséquent de promouvoir la création de forces répulsives de nature électrique entre ces particules, tels que des silicates (en particulier des métasilicates) de métal alcalin, des polyphosphates de métal alcalin et des sels de métal alcalin de polyacides organiques (en particulier des polyacrylates);
- des agents mouillants, c'est-à-dire des composés capables de modifier la tension de surface du milieu, comprenant généralement des proupes de nature hydrophile et hydrophobe. Ils peuvent inclure des agents tensio-actifs anioniques (par exemple des alkylarylsulfonates de métal alcalin), cationiques (par exemple des sels d'ammonium quaternaires) ou non-ioniques (par exemple des polyétheroxydes);
- des modificateurs de rhéologie ou épaississants tels que des polymères hydrosolubles modifiés par des groupes hydrophobes (par exemple éthoxylate d'uréthane modifié de manière hydrophobique) et des dérivés d'hydroxyalkyl cellulose;
- des bases minérales, c'est-à-dire par exemple l'ammoniaque, l'hydroxyde de sodium ou de potassium;
- des agents anti-moussants tels qu'un mélange d'huile minérale et d'émulsifiant non-ionique;
- des biocides, c'est-à-dire des composés capables de détruire les microorganismes, tels que des dérivés de chloroallyle ou d'isothiazolone;
- des anticorrosifs tels qu'une solution aqueuse de benzoate de sodium et/ou de nitrite de sodium;
- des insecticides, pesticides, fongicides et acaricides, tels que des composés pyréthrinoides (par exemple la décaméthrine ou la dieldrine), le lindane, des composés N-hétérocycliques, des composés uracyles, des dérivés de triazole, des composés organophosphorés.

Les choix des adjuvants particuliers et leurs quantités respectives sont généralement dictés par les propriétés désirées pour une peinture aqueuse particulière et sont à la portée de l'homme de l'art. En général cependant, les peintures au latex de la présente invention possèdent un taux de matières solides global compris entre environ 40 et 70% en poids.

Les peintures aqueuses de la présente invention peuvent être appliquées à la surface d'un mur ou à tout autre substrat par tout moyen conventionnel, par exemple brosse, rouleau, pistolet. La peinture peut ètre réticulée ou séchée après application sur le substrat, également par des moyens conventionnels, par exemple séchage à l'air, cuisson. Le revêtement peinture, réticulé ou non, possède d'excellentes performances en ce qui concerne la résistance au jaunissement, la lessivabilité et la coalescence à basse température. En outre, les surfaces revètues au moyen des peintures au latex selon la présente invention se comportent bien à l'égard du rapport de contraste (c'est-à-dire le pouvoir couvrant).

Ces propriétés sont plus amplement illustrées dans les exemples suivants, présentés dans le but d'illustrer la présente invention. Sauf exception, toutes les quantités sont exprimées en poids.

### EXEMPLE 1

Une pré-émulsion est préparée à température ambiante (23°C) en ajoutant les ingrédients suivants dans un récipient équipé d'un agitateur dans l'ordre suivant:

| | |
|---|---|
| Eau déminéralisée | 44,64 parties |
| Tensio-actif anionique commercialisé par SCHERING sous la marque REWOPOL NOS 25 (35% actif) | 2,71 parties |
| Tensio-actif non-ionique commercialisé par SCHERING sous la marque REWOPOL HV 25 (80% actif) | 8,00 parties |
| Acrylamide | 0,50 partie |
| Acide acrylique | 2,50 parties |
| Acrylate de butyle | 61,40 parties |
| Styrène | 35,60 parties |
| n-dodécylmercaptan | 0,05 partie |

Dans le réacteur sont chargés 10% en poids (c'est-à-dire 15,54 parties) de la pré-émulsion ci-dessus, 44,44 parties d'eau minéralisée et 0,86 partie de REWOPOL NOS 25. Le réacteur est alors chauffé à 70°C puis maintenu à cette température. Dans le réacteur on ajoute alors une solution de métabisulfite (0,02 partie de métabisulfite de sodium dans 1 partie d'eau) et une solution d'initiateur (0,03 partie de persulfate d'ammonium). La polymérisation est alors poursuivie pendant 15 minutes, durée après laquelle la taille moyenne des particules de polymère est controlée au moyen d'un appareil AutoSizer Lo-C de MALVERN INSTRUMENTS et trouvée égale à 84 nm. Après ce moment et pendant une durée supplémentaire de 4,5 heures, on introduit simultanément et progressivement dans le réacteur maintenu à la même température de 70°C:
- les 90% en poids restants (c'est-à-dire 140 parties) de la pré-émulsion de départ, et
- une solution d'initiateur (0,3 partie de persulfate d'ammonium dans 4,5 parties d'eau).

Après cette période, la température est maintenue à 70°C pendant 15 minutes supplémentaires puis elle est augmentée jusqu'à 80°C pour une période de cuisson d'une heure. Le latex résultant est alors refroidi à 60°C avant d'introduire dans le réacteur une solution de peroxyde d'hydrogène (0,21 partie H202 dans 1,54 partie d'eau) et une solution acide ascorbique/ sel de Mohr (0,01 partie de sulfate d'ammonium de fer (II) hexahydrate et 0,21 partie d'acide ascorbique dans 1 partie d'eau). Après une heure supplémentaire, le latex est ensuite refroidi jusqu'à 30°C et une solution de soude est ajoutée en vue d'ajuster le pH à la valeur désirée d'environ 8,0.

D'autres caractéristiques du latex résultant sont:
- un taux de matières solides de 50,6%.
- une taille moyenne de particules (mesurée par la mème méthode que ci-dessus) de 157 nm.
- une viscosité Brookfield (à 100 tours/minute) de 3,2 poises.
- un taux de monomères résiduel de 10 ppm.
- une tempétature de filmification minimale inférieure à 0°C.

### EXEMPLE 2

On répète le processus opératoire de l'exemple 1 à l'exception suivante: la quantité de pré-émulsion ajoutée dans le récipient en tant que charge initiale pour la prépolymérisation est seulement de 7,77 parties, c'est-à-dire 5% en poids de la totalité de la pré-émulsion de monomère. Après les 15 minutes de la période de prépolymérisation, la taille moyenne des particules de polymère est de 54 nm. Les caractéristiques du latex final obtenu sont :
- un taux de matières solides de 49,2%.
- une taille moyenne de particules de 155 nm.
- une viscosité Brookfield (à 100 t/min.) de 9,2 poises.
- un taux de monomères résiduel de 15 ppm.
- une température de filmification minimale inférieure à 0°C.

### EXEMPLE 3

On répète le processus opératoire de l'exemple l'aux exceptions suivantes près: la quantité de REWOPOL HV 25 (80% actif) dans la pré-émulsion est réduite à 2,5 parties. La taille moyenne des particules de polymère après les 15 minutes de polymérisation initiale est de 73 nm. Les caractétéristiques du latex final sont:
- un taux de solides de 50%.
- une taille moyenne de particules de 148 nm.
- une viscosité Brookfield (à 100 t/min.) de 3,05 poises.
- un taux de monomères résiduel de 45 ppm.
- une température de filmification minimale inférieure à 0°C.

### EXEMPLE 4

On répète le processus opératoire de l'exemple 2, éxcepté que:
- on n'ajoute pas de REWOPOL NOS 25 avec la partie minoritaire (5% en poids) de la pré-émulsion durant l'étape initiale.
- la quantité de REWOPOL HV 25 (80% actif) dans la pré-émulsion de monomère est accrue jusqu'à 10 parties en poids.
- la durée de l'étape initiale de pré-polymérisation du flux partiel (5%) de monomères est augmentée jusqu'à 30 minutes.

La taille moyenne des particules de polymère après l'étape de polymérisation partielle est de 95 nm.

Les caractéristiques supplémentaires du latex résultant sont:
- un taux de matières solides de 50,1%.
- une taille moyenne de particules de 172 nm.
- une viscosité Brookfield (à 100 t/min.) de 8,8 poises.
- un taux de monomères résiduel de 30 ppm.
- une température de filmification minimale inférieure à 0°C.

### EXEMPLE 5 (COMPARATIF)

On répète le processus opératoire de l'exemple 4 aux exceptions suivantes près:
- la quantité de REWOPOL HV 25 (80% actif) dans la pré-émulsion est diminuée jusqu'à 6,25 parties en poids.
- la quantité de pré-émulsion ajoutée dans le récipient en tant que charge initiale pour la pré-polymérisation est augmentée jusqu'à 46,6 parties, c'est-à-dire 30% en poids de la totalité de la pré-émulsion de monomères.

La taille moyenne des particules de polymère après 30 minutes de l'étape de pré-polymérisation initiale est de 110 nm. Les caractéristiques supplémentaires du latex final résultant sont:
- un taux de matières solides de 50,2%.
- un taux de monomères résiduel de 20 ppm.

### EXEMPLES 6 à 10

Les dispersions aqueuses de polymère des exemples 1 à 5 ont été formulées dans des compositions de peinture comprenant:
- eau 270 parties
- agent mouillant commercialisé par BENKISER sous la marque LOPON 890 3 parties
- biocide commercialisé par RIEDEL DE HAEN sous la marque MERGAL K 10 1 partie
- agent mouillant et dispersant commercialisé par MUNZING sous la marque AGITAN 281 2 parties
- agent épaississant (modificateur de rhéologie) commercialisé par HOECHST sous la marque MHB 6000 Y 4,5 parties
- oxyde de titane commercialisé par SACHTLEBEN sous la marque HOMBITAN R 611 50 parties
- carbonate de calcium commercialisé par DEUTSCHE SOLVAY sous la marque SOCAL P 2 160 parties
- craie (qualité industrielle) 250 parties
- carbonate de calcium commercialisé par OMYA sous la marque CALCIDAR BL 110 parties
- silice commercialisée par LANGER sous la marque DICALITA WB 5 10 parties
- solution aqueuse de soude à 25% 2 parties
- émulsion aqueuse de pomymère 117,6 parties

La lessivabilité L de ces peintures a été mesurée après 8 jours conformément à la norme DIN 53778. Le tableau suivant indique les valeurs de lessivabilité, exprimée en cycles, en fonction de la nature de l'émulsion polymère aqueuse utilisée. Comme on le comprendra facilement, l'exemple 10 est comparatif.

**TABLEAU**

| Exemple | 6 | 7 | 8 | 9 | 10 |
|---|---|---|---|---|---|
| Emulsion polymère aqueuse de l'exemple | 1 | 2 | 3 | 4 | 5 |
| L | 700 | 800 | 870 | 700 | 330 |

## Revendications

1. Emulsion polymère aqueuse préparée à partir d'une composition de monomères comprenant, pour 100 parties en poids de composition :
- de 60 à 100 parties en poids d'au moins un ester acrylique ou méthacrylique dérivé d'acide acrylique ou méthacrylique et d'un alcool ayant de 1 à 12 atomes de carbone ;
- de 0 à 40 parties en poids d'au moins un monomère vinylaromatique,
- de 0 à 5 parties en poids d'au moins un acide mono- ou polycarboxylique α,β-insaturé à chaîne courte, et
- de 0 à 3 parties en poids d'au moins un amide α,β-insaturé à chaîne courte,
**caractérisée en ce que** de 80 à 95% en poids des composants monomères sont ajoutés à un milieu réactionnel contenant déjà une pré-émulsion partiellement polymérisée de 5 à 20% en poids des composants monomères, la taille moyenne des particules de polymère présentes dans ladite pré-émulsion partiellement polymérisée ayant été contrôlée pour ne pas dépasser 95 nm.

2. Emulsion polymère aqueuse selon la revendication 1, **caractérisée en ce que** la taille moyenne des particules de polymère présentes dans la pré-émulsion partiellement polymérisée a été contrôlée pour ne pas dépasser 65 nm.

3. Emulsion polymère aqueuse selon la revendication 1 ou la revendication 2, **caractérisée en ce que** tous les composants monomères sont ajoutés au milieu réactionnel sous forme émulsifiée.

4. Emulsion polymère aqueuse selon l'une des revendications 1 à 3, **caractérisée en ce que** la durée de polymérisation du flux de pré-émulsion partielle ne dépasse pas 45 minutes.

5. Emulsion polymère aqueuse selon l'une des revendications 1 à 4, **caractérisée en ce que** le taux global de conversion des monomères dans le flux de pré-émulsion partielle est d'au moins 50% en poids.

6. Emulsion polymère aqueuse selon l'une des revendications 1 à 5, **caractérisée en ce que** le taux global de conversion des monomères dans le flux de pré-émulsion partielle est d'au moins 90% en poids.

7. Emulsion polymère aqueuse selon l'une des revendications 1 à 6, **caractérisée en ce qu'**elle est préparée en présence d'une combinaison d'un tensio-actif non-ionique et d'un tensio-actif anionique.

8. Emulsion polymère aqueuse selon la revendication 7, **caractérisée en ce que** le rapport en poids du tensio-actif anionique au tensio-actif non-ionique est compris entre 0,01 et 1.

9. Emulsion polymère aqueuse selon l'une des revendications 1 à 8, **caractérisée en ce qu'**elle est préparée en présence de 2 à 20% en poids de tensio-actifs par rapport aux composants monomères.

10. Emulsion polymère aqueuse selon l'une des revendications 1 à 9, **caractérisée en ce qu'**elle est traitée, après l'étape de polymérisation principale, au moyen d'un système initiateur de radicaux libres ayant un court temps de demi-vie afin d'atteindre un taux de monomère résiduel ne dépassant pas 50 ppm.

11. Emulsion polymère aqueuse selon l'une des revendications 1 à 10, **caractérisée en ce qu'**elle permet de parvenir à des valeurs de lessivabilité, mesurées selon la norme DIN 53778, aussi élevées qu'au moins environ 700 cycles pour une mesure effectuée après 8 jours de séchage sur un film de peinture comprenant 12% en poids de ladite composition aqueuse polymère.

12. Composition de peinture sans plastifiant et sans agent de coalescence comprenant une émulsion aqueuse de polymère selon l'une des revendications 1 à 11.

## Patentansprüche

1. Wäßrige Polymeremulsion, hergestellt aus einer Monomerzusammensetzung, enthaltend, bezogen auf 100 Gew.-Teile Monomerzusammensetzung:
- 60 bis 100 Gew.-Teile mindestens eines Acrylsäure- oder Methacrylsäureesters, der sich von Acryl- oder Methacrylsäure und einem Alkohol mit 1 bis 12 Kohlenstoffatomen ableitet,
- 0 bis 40 Gew.-Teile mindestens eines vinylaromatischen Monomers,
- 0 bis 5 Gew.-Teile mindestens einer kurzkettigen, α,β-ungesättigten Mono- oder Polycarbonsäure und
- 0 bis 3 Gew -teile mindestens eines kurzkettigen, α,β-ungesättigten Amids,
**dadurch gekennzeichnet, daß** 80 bis 95 Gew.-% monomerer Bestandteile zu einem bereits eine teilweise polymerisierte Voremulsion aus 5 bis 20 Gew.-% monomerer Bestandteile enthaltenden Reaktionsmedium gegeben werden, wobei die mittlere Größe der in dieser teilweise polymerisierten Voremulsion vorliegenden Polymerteilchen so reguliert wurde, daß sie 95 nm nicht überschreitet.

2. Wäßrige Polymeremulsion nach Anspruch 1, **dadurch gekennzeichnet, daß** die mittlere Große der in dieser teilweise polymerisierten Voremulsion vorliegenden Polymerteilchen so reguliert wurde, daß sie 65 nm nicht überschreitet.

3. Wäßrige Polymeremulsion nach Anspruch 1 oder 2, **dadurch gekennzeichnet, daß** alle monomeren Bestandteile dem Reaktionsmedium in emulgierter Form zugegeben werden.

4. Wäßrige Polymeremulsion nach einem der Ansprüche 1 bis 3, **dadurch gekennzeichnet, daß** die Polymerisationsdauer der teilweise zu polymerisierenden Voremulsionsmasse 45 Minuten nicht überschreitet.

5. Wäßrige Polymeremulsion nach einem der Ansprüche 1 bis 4, **dadurch gekennzeichnet, daß** der Gesamtmonomerumsetzüngsgrad in der teilweise zu polymerisierenden Voremulsionsmasse mindestens 50 Gew. -% beträgt.

6. Wäßrige Polymeremulsion nach einem der Ansprüche 1 bis 5, **dadurch gekennzeichnet, daß** der Gesamtmonomerumsetzungsgrad in der teilweise zu polymerisierenden Voremulsionsmasse mindestens 90 Gew. % beträgt.

7. Wäßrige Polymeremulsion nach einem der Ansprüche 1 bis 6, **dadurch gekennzeichnet, daß** sie in Gegenwart einer Kombination aus nichtionischem Tensid und anionischem Tensid hergestellt wird.

8. Wäßrige Polymeremulsion nach Anspruch 7, **dadurch gekennzeichnet, daß** das Gewichtsverhältnis von anionischem Tensid zu nichtionischem Tensid zwischen 0,01 und 1 liegt.

9. Wäßrige Polymeremulsion nach einem der Ansprüche 1 bis 8, **dadurch gekennzeichnet, daß** sie in Gegenwart von 2 bis 20 Gew.-% Tensiden, bezogen auf die monomeren Bestandteile, hergestellt wird.

10. Waßrige Polymeremulsion nach einem der Ansprüche 1 bis 9, **dadurch gekennzeichnet, daß** sie zur Erzielung eines Restmonomergehalts von nicht mehr als 50 ppm nach der Polymerisationhauptstufe mit einem radikalischen Initiatorsystem mit kurzer Halbwertszeit behandelt wird.

11. Wäßrige Polymeremulsion nach einem der Ansprüche 1 bis 10, **dadurch gekennzeichnet, daß** sich mit ihr nach der DIN-Norm 53778 gemessene Werte für die Waschechtheit von bis zu mindestens ca. 700 Durchgängen erzielen lassen, wenn die Messung nach 8 Tagen Trocknen an einem Lackfilm, enthaltend 12 Gew.-% der wäßrigen Polymerzusammensetzung, erfolgt.

12. Weichmacherfreie und koaleszenzmittelfreie Lackzusammensetzung, enthaltend eine wäßrige Polymeremulsion nach einem der Ansprüche 1 bis 11.

## Claims

1. Aqueous polymer emulsion prepared from a monomer composition including, per 100 parts by weight of composition:
- from 60 to 100 parts by weight of at least one acrylic or methacrylic ester derived from acrylic or methacrylic acid and from an alcohol containing from 1 to 12 carbon atoms;
- from 0 to 40 parts by weight of at least one vinylaromatic monomer,
- from 0 to 5 parts by weight of at least one short-chain, α,β-unsaturated mono- or polycarboxylic acid, and
- from 0 to 3 parts by weight of at least one short-chain α,β-unsaturated amide,
**characterized in that** from 80 to 95% by weight of the monomer components is added to a reaction mixture already containing a partially polymerized preemulsion of 5 to 20 % by weight of the monomer components, the mean size of the polymer particles present in the said partially polymerized preemulsion having been controlled not to exceed 95 nm.

2. Aqueous polymer emulsion according to claim 1, **characterized in that** the mean size of the polymer particles present in the partially polymerized preemulsion has been controlled not to exceed 65 nm.

3. Aqueous polymer emulsion according to Claim 1 or Claim 2, **characterized in that** all the monomer components are added to the reaction mixture in emulsified form.

4. Aqueous polymer emulsion according to one of Claims 1 to 3, **characterized in that** the duration of polymerization of the partial preemulsion flow does not exceed 45 minutes.

5. Aqueous polymer emulsion according to one of Claims 1 to 4, **characterized in that** the overall degree of conversion of the monomers in the partial preemulsion flow is at least 50 % by weight.

6. Aqueous polymer emulsion according to one of Claims 1 to 5, **characterized in that** the overall degree of conversion of the monomers in the partial preemulsion flow is at least 90 % by weight.

7. Aqueous polymer emulsion according to one of Claims 1 to 6, **characterised in that** it is prepared in the presence of a combination of a nonionic surfactant and of an anionic surfactant.

8. Aqueous polymer emulsion according to Claim 7, **characterized in that** the weight ratio of the anionic surfactant to the nonionic surfactant is between 0.01 and 1.

9. Aqueous polymer emulsion according to one of Claims 1 to 8, **characterized in that** it is prepared in the presence of 2 to 20 % by weight of surfactants in relation to the monomer components.

10. Aqueous polymer emulsion according to one of Claims 1 to 9, **characterized in that**, after the main polymerization stage, it is treated by means of a free-radical initiator system which has a short half-life in order to reach a residual monomer content not exceeding 50 ppm.

11. Aqueous polymer emulsion according to one of Claims 1 to 10, **characterized in that** it makes it possible to attain washability values, measured according to DIN Standard 53778, as high as at least approximately 700 cycles in the case of a measurement performed after 8 days of drying on a paint film including 12 % by weight of the said polymer aqueous composition.

12. Paint composition without plasticizer and without coalescing agent, including an aqueous emulsion of polymer according to one of Claims 1 to 11.
